# EUROPÄISCHE PATENTSCHRIFT

(11) **EP 2 697 104 B1**
(45) Veröffentlichungstag und Bekanntmachung des Hinweises auf die Patenterteilung: **11.10.2017**
(21) Anmeldenummer: 12708026.5
(22) Anmeldetag: 09.03.2012
(51) Int. Cl.: B60S 1/38, B60S 1/40

(54) **WISCHBLATTADAPTERVORRICHTUNG**
WIPER BLADE ADAPTER DEVICE
DISPOSITIF ADAPTATEUR DE BALAI D'ESSUIE-GLACE

(30) Priorität: 13.04.2011 DE 102011007248
(43) Veröffentlichungstag der Anmeldung: 19.02.2014
(73) Patentinhaber: Robert Bosch GmbH, 70442 Stuttgart (DE)
(72) Erfinder: BENNER, Andreas, 104 Taipei (TW); LICHTENTHALER, Eckhard, 76228 Karlsruhe-Hohenwettersbach (DE); OBERT, Mike, 76593 Gernsbach (DE)
(86) Internationale Anmeldenummer: PCT/EP2012/054109
(87) Internationale Veröffentlichungsnummer: WO 2012/139825

(56) Entgegenhaltungen:
- DE-A1-102009 002 783
- FR-A1- 2 311 694
- GB-A- 713 425
- JP-A- 2005 059 630

## Beschreibung

### Stand der Technik

Es sind bereits Wischblattadaptervorrichtungen mit einem Wischarmadapter und einem Wischblattadapter bekannt.

Aus der JP 2005/059630 A ist eine Wischblattadaptervorrichtung gemäß dem Oberbegriff des Anspruchs 1 bekannt.

### Offenbarung der Erfindung

Die Erfindung geht aus von einer Wischblattadaptervorrichtung mit einem Wischarmadapter und einem Wischblattadapter.

Es wird vorgeschlagen, dass die Wischblattadaptervorrichtung eine Drehlagereinheit aufweist, die dazu vorgesehen ist, den Wischarmadapter und den Wischblattadapter bei einem Montagevorgang relativ zueinander um eine Vertikalachse drehbar zu lagern. Dadurch kann für einen Benutzer ein schneller und intuitiver Montagevorgang erreicht werden. Unter einem "Wischarmadapter" soll in diesem Zusammenhang insbesondere ein Adapter verstanden werden, der einen Kontaktbereich zu einem Wischarmbauteil aufweist und dazu vorgesehen ist, einen Kopplungsbereich des Wischarmbauteils für eine Kopplung und/oder Kontaktierung mit einem Wischblattadapter bereitzustellen. Bevorzugt ist das Wischarmbauteil an einem Wischerarm befestigbar. Unter einem "Wischblattadapter" soll in diesem Zusammenhang insbesondere ein Adapter verstanden werden, der einen Kontaktbereich zu einem Wischblattbauteil aufweist und mit dem Wischblattbauteil unverlierbar verbunden und dazu vorgesehen ist, einen Kopplungsbereich des Wischblattbauteils für eine Kopplung und/oder Kontaktierung mit einem Wischarmadapter bereitzustellen. Unter einer "Vertikalachse" soll in diesem Zusammenhang insbesondere eine Achse verstanden werden, die senkrecht zu einer Auflagefläche des Wischblattadapters angeordnet ist. Unter einer "Auflage fläche" soll in diesem Zusammenhang insbesondere eine ebene Fläche verstanden werden, auf die der Wischarmadapter bei einem Montagevorgang aufsetzt und/oder die dazu vorgesehen ist, eine Hauptanpresskraft des Wischarmadapters auf den Wischblattadapter zu übertragen. Unter einer "Hauptanpresskraft" soll in diesem Zusammenhang insbesondere eine Kraft verstanden werden, die den Wischblattadapter und/oder ein Wischblatt in Richtung einer zu wischenden Oberfläche, wie insbesondere einer Kraftfahrzeugscheibe, drückt. Unter "vorgesehen" soll insbesondere speziell ausgelegt und/oder ausgestattet verstanden werden. Nach der Erfindung wird vorgeschlagen, dass die Wischblattadaptervorrichtung eine Rasteinheit aufweist, die dazu vorgesehen ist, in einem montierten Zustand eine Rastverbindung zwischen dem Wischarmadapter und dem Wischblattadapter zu bilden, wodurch eine besonders einfache Sicherung der Wischblattadaptervorrichtung in einem montierten Zustand erreicht werden kann. Unter einer "Rasteinheit" soll dabei insbesondere eine Einheit mit wenigstens einem Rastelement verstanden werden, das bei einem Montagevorgang elastisch ausgelenkt wird, um anschließend durch eine innere Spannkraft in einer korrespondierenden Rastausnehmung einzurasten.

Ferner wird vorgeschlagen, dass die Rasteinheit zumindest eine Rastausnehmung und zumindest ein Rastmittel aufweist, wobei das zumindest eine Rastmittel in einem montierten Zustand formschlüssig innerhalb der zumindest einen Rastausnehmung angeordnet ist. Dadurch kann eine besonders sichere Rastverbindung hergestellt werden. Unter einem "Rastmittel" soll in diesem Zusammenhang insbesondere ein federelastisches Mittel zur Herstellung einer Rastverbindung verstanden werden, das dazu vorgesehen ist, bei einer Montage elastisch ausgelenkt zu werden. Unter einer "Rastausnehmung" soll in diesem Zusammenhang insbesondere eine Ausnehmung verstanden werden, die mit einem Rastmittel korrespondiert und/oder dazu vorgesehen ist, das Rastmittel in einem montierten Zustand aufzunehmen.

Ist das zumindest eine Rastmittel am Wischarmadapter angeordnet, kann es für einen Bediener gut erreichbar ausgestaltet werden und eine Bedienung des zumindest einen Rastmittels, beispielsweise für eine Demontage, kann besonders einfach erfolgen.

Ferner wird vorgeschlagen, dass das zumindest eine Rastmittel dazu vorgesehen ist, um die Vertikalachse ausgelenkt zu werden. Dadurch kann eine Belastung des zumindest einen Rastmittels in einem Betriebszustand gering gehalten werden, was zu einer hohen Haltbarkeit der Wischblattadaptervorrichtung führen kann.

Eine besonders platzsparende Ausführung der Rasteinheit kann erreicht werden, wenn die Rastausnehmung am Wischblattadapter angeordnet ist. Bevorzugt ist die Rastausnehmung innerhalb eines Führungselements des Wischblattadapters angeordnet. Nach der Erfindung wird vorgeschlagen, dass die Drehlagereinheit einen Lagerzapfen umfasst, der dazu vorgesehen ist, in einem montierten Zustand einen Formschluss mit einer Lagerausnehmung zu bilden.

Dadurch kann eine platzsparende und stabile Drehlagerung des Wischarmadapters und des Wischblattadapters erreicht werden. Unter einem "Lagerzapfen" soll in diesem Zusammenhang insbesondere ein zylinderförmiges Bauteil verstanden werden, das eine Lagerfläche zur Kopplung und/oder Kontaktierung eines zu lagernden Bauteils bereitstellt.

Eine besonders stabile Ausführung der Drehlagereinheit kann erreicht werden, wenn der Lagerzapfen am Wischblattadapter angeordnet ist. In einer zusätzlichen Ausgestaltung ist der Lagerzapfen einstückig mit einem Grundkörper des Wischblattadapters ausgebildet. Unter "einstückig" soll insbesondere stoffschlüssig verbunden, wie beispielsweise durch einen Schweißprozess und/oder Klebeprozess usw., und besonders vorteilhaft angeformt verstanden werden, wie durch die Herstellung aus einem Guss und/oder durch die Herstellung in einem Ein- oder Mehrkomponentenspritzverfahren.

Ist die Lagerausnehmung am Wischarmadapter angeordnet, können eine sichere Aufnahme des Lagerzapfens und/oder eine zuverlässige Drehlagerung des Wischblattadapters und des Wischarmadapters erreicht werden.

### Zeichnungen

Weitere Vorteile ergeben sich aus der folgenden Zeichnungsbeschreibung. In der Zeichnung ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Explosionsdarstellung einer erfindungsgemäßen Wischblattadaptervorrichtung,
- Fig. 2: eine perspektivische Ansicht der Wischblattadaptervorrichtung nach Figur 1 in einem ersten Montageschritt,
- Fig. 3: eine perspektivische Ansicht der Wischblattadaptervorrichtung nach Figur 1 in einem weiteren Montageschritt und
- Fig. 4: eine perspektivische Ansicht der Wischblattadaptervorrichtung nach Figur 1 in einem montierten Zustand.

### Beschreibung des Ausführungsbeispiels

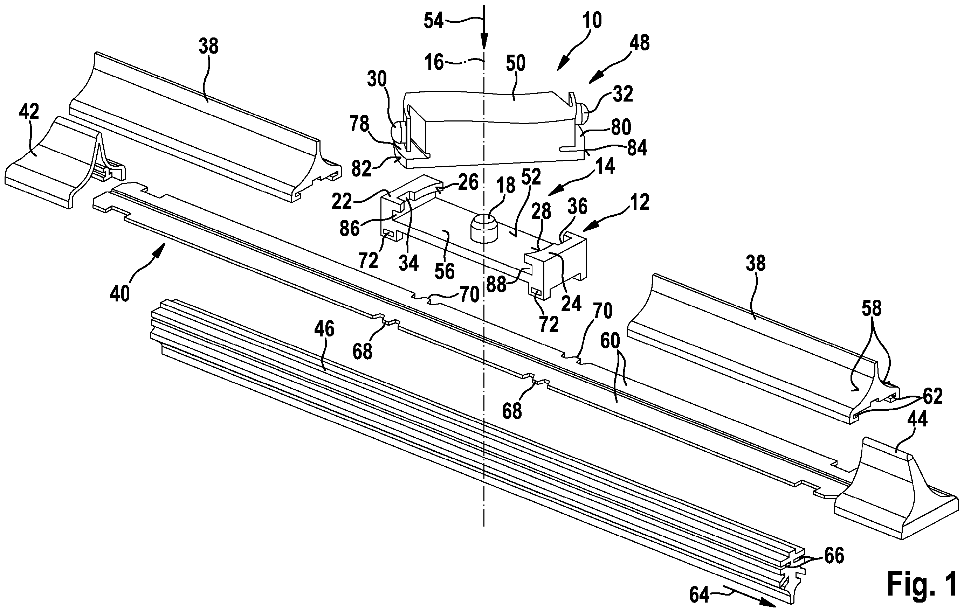

Figur 1 zeigt eine Explosionsdarstellung einer erfindungsgemäßen Wischblattadaptervorrichtung mit einem Wischarmadapter 10 und einem Wischblattadapter 12. Der Wischarmadapter 10 ist vom Wischblattadapter 12 lösbar und somit austauschbar ausgebildet. Der Wischarmadapter 10 weist eine Schnittstelle zu einem Wischarm (nicht gezeigt) auf. Je nach Ausführungsform des Wischarms muss der Wischarmadapter 10 ausgetauscht werden. Ausführungsformen der besagten Schnittstelle des Wischarmadapters 10 sind dem Fachmann allgemein bekannt und aus Gründen der Übersichtlichkeit nicht dargestellt. Die Wischblattadaptervorrichtung umfasst ferner eine Rasteinheit 48. Der Wischarmadapter 10 weist einen Grundkörper 50 auf, der an zwei gegenüberliegenden Seiten jeweils ein Rastmittel 30, 32 der Rasteinheit 48 beinhaltet. Die Rastmittel 30, 32 sind einstückig mit dem Grundkörper 50 ausgebildet. Die Rastmittel 30, 32 lassen sich um eine Vertikalachse 16 um maximal fünf Millimeter auslenken.

Der Wischblattadapter 12 weist einen Grundkörper 56 auf. Der Grundkörper 56 umfasst eine ebene Auflagefläche 52. Ferner ist der Grundkörper 56 von einem Kunststoff-Spritzgussteil gebildet. Es ist in diesem Zusammenhang auch denkbar, den Grundkörper 56 aus einem Metallteil zu bilden, wie insbesondere aus einem Metallblech.

Die Vertikalachse 16 ist senkrecht zur Auflagefläche 52 des Wischblattadapters 12 angeordnet. Die Auflagefläche 52 dient bei einem Montagevorgang als Anlage für den Wischarmadapter 10. Der Wischarmadapter 10 wird bei einem Montagevorgang auf die Auflagefläche 52 aufgesetzt. Zudem ist die Vertikalachse 16 parallel zu einer Hauptanpresskraft 54 des Wischarmadapters 10 angeordnet. Die Hauptanpresskraft 54 wird durch ein Drehmoment des Wischarms erzeugt und drückt den Wischblattadapter 12 und ein mit dem Wischblattadapter 12 verbundenes gelenkfreies Wischblatt 46 in Richtung einer zu wischenden Kraftfahrzeugscheibe (nicht dargestellt).

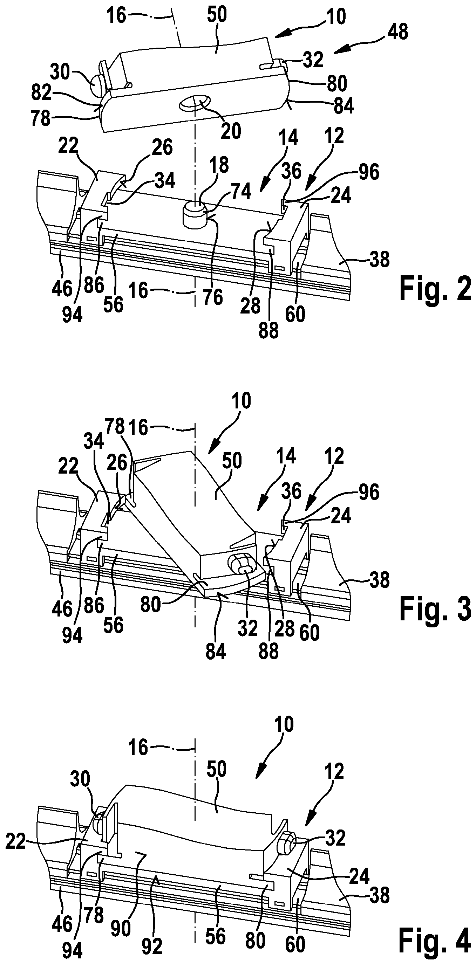

An der Wischblattadaptervorrichtung sind ein Windabweiserelement 38, ein Trägerelement 40 und das Wischblatt 46 angeordnet. Das Windabweiserelement 38 weist zwei symmetrisch ausgebildete, konkave Windabweiserflächen 58 auf, die in einem Betriebzustand auftretenden Fahrtwind abweisen und dabei die Hauptanpresskraft 54 erhöhen. Zudem ist das Windabweiserelement 38 zweigeteilt, also von zwei getrennten Bauteilen gebildet. Das Trägerelement 40 umfasst zwei Federschienen 60. Es ist in diesem Zusammenhang jedoch auch denkbar, eine einteilige Federschiene als Trägerelement einzusetzen. Das Trägerelement 40 wird bei einer Montage in eine Längsführungsschiene 62 des Windabweiserelements 38 eingeschoben. Das Wischblatt 46 wird dabei von den Federschienen 60 beidseitig gehalten. Dazu weist das Wischblatt 46 auf jeder Seite eine Aufnahmenut 66 für das Trägerelement 40 auf. Zwei Abschlusskappen 42, 44 schließen das Trägerelement 40 jeweils an einem Ende in eine Längsrichtung 64 des Wischblatts 46 ab und vermeiden ein Lösen der Federschienen 60 aus der Aufnahmenut 66. Das Wischblatt 46 ist somit in einem montierten Zustand über das Trägerelement 40 mit dem Windabweiserelement 38 verbunden (Figur 2).

Das Trägerelement 40 weist vier Befestigungsnasen 68, 70 auf. Jeweils zwei Befestigungsnasen 68 weisen in eine Richtung, die entgegengesetzt zu einer Richtung der anderen beiden Befestigungsnasen 70 verläuft. Der Grundkörper 56 des Wischblattadapters 12 weist vier Befestigungsausnehmungen 72 auf, die mit den Befestigungsnasen 68, 70 in ihrer Form korrespondieren. Für eine Montage des Wischblattadapters 12 mit dem Trägerelement 40 werden die Befestigungsnasen 68, 70 in die Befestigungsausnehmungen 72 eingeführt. Es sind ferner viele weitere, dem Fachmann als sinnvoll erscheinende Befestigungsmethoden zur Befestigung des Trägerelements 40 mit dem Wischblattadapter 12 denkbar, wie insbesondere ein Einhängen eines Trägerelements in eine Führungsschiene des Wischblattadapters. Ferner ist ein Umschließen des Grundkörpers von einem Trägerelement denkbar. Des Weiteren ist es auch denkbar, das Trägerelement mit dem Grundkörper zu verkleben, zu verschrauben und/oder zu vernieten. Ist der Grundkörper des Wischblattadapters von einem Metallteil gebildet, kann eine Verbindung eines Trägerelements auch durch eine Schweiß- oder Lötverbindung erfolgen.

Figur 2 zeigt eine perspektivische Darstellung der Wischblattadaptervorrichtung vor einem Montagevorgang. Das Windabweiserelement 38, das Trägerelement 40 und das Wischblatt 46 sind mit dem Wischblattadapter 12 unverlierbar verbunden. Die Wischblattadaptervorrichtung weist eine Drehlagereinheit 14 auf. Die Drehlagereinheit 14 ist dazu vorgesehen, den Wischarmadapter 10 und den Wischblattadapter 12 bei einem Montagevorgang relativ zueinander um die Vertikalachse drehbar zu lagern. Dazu umfasst die Drehlagereinheit 14 einen Lagerzapfen 18.

Der Lagerzapfen 18 ist mit dem Grundkörper 56 des Wischblattadapters 12 einstückig ausgebildet. Es ist in diesem Zusammenhang jedoch auch denkbar, den Lagerzapfen 18 durch einen Form- und/oder Kraftschluss am Grundkörper 56 zu befestigen, wie insbesondere durch eine Gewindeverbindung. Der Lagerzapfen 18 ist zylinderförmig ausgebildet und weist an einer Zylinderkante eine Fase 74 auf. Eine Mantelfläche 76 des Lagerzapfens 18 stellt eine Lagerfläche zur Kontaktierung des Wischarmadapters 10 bereit. Im Grundkörper 50 des Wischarmadapters 10 ist eine Lagerausnehmung 20 angeordnet. Die Lagerausnehmung 20 korrespondiert mit dem Lagerzapfen 18 in seiner geometrischen Form. Bei einem Einsetzen des Lagerzapfens 18 in die Lagerausnehmung 20 kontaktiert die Mantelfläche 76 den Grundkörper 50 innerhalb der Lagerausnehmung 20.

Die Rasteinheit 48 weist zusätzlich zu den zwei Rastmitteln 30, 32 zwei Rastausnehmungen 34, 36 auf, die in jeweils einem Führungselement 22, 24 des Grundkörpers 56 des Wischblattadapters 12 angeordnet sind. Die Führungselemente 22, 24 sind einstückig mit dem Grundkörper 56 ausgebildet. Die Führungselemente 22, 24 erstrecken sich, von der Auflagefläche 52 des Grundkörpers 56 ausgehend, parallel zur Vertikalachse 16 in dieselbe Richtung wie der Lagerzapfen 18. Dabei bildet jedes Führungselement 22, 24 eine kreisbogenförmige Führungsfläche 26, 28 zur Führung des Wischarmadapters 10 während eines Montagevorgangs. An jedem Führungselement 22, 24 ist an einem freien Ende ein Anschlagelement 94, 96 angeordnet. Die Anschlagelemente 94, 96 sind jeweils einstückig mit den Führungselementen 22, 24 ausgebildet. Die Anschlagelemente 94, 96 sind am Grundkörper 56 des Wischblattadapters 12 gegenüberliegend angeordnet.

In Figur 3 ist die Wischblattadaptervorrichtung in einem ersten Montageschritt gezeigt. Der Wischarmadapter 10 ist dabei auf den Wischblattadapter 12 aufgesetzt. Der Grundkörper 50 des Wischarmadapters 10 liegt auf der Auflagefläche 52 des Grundkörpers 56 des Wischblattadapters 12 auf. Der Lagerzapfen 18 des Wischblattadapters 12 ist innerhalb der Lagerausnehmung 20 des Wischarmadapters 10 angeordnet. Eine Bewegung des Wischblattadapters 12 relativ zum Wischarmadapter 10 ist translatorisch parallel zur Vertikalachse 16 und rotatorisch um die Vertikalachse 16 möglich.

Um eine Bewegung des Wischblattadapters 12 relativ zum Wischarmadapter 10 parallel zur Vertikalachse 16 zu vermeiden, weist der Wischarmadapter 10 zwei am Grundkörper 50 gegenüberliegend angeordnete Vertikalhaltemittel 78, 80 auf. Die Vertikalhaltemittel 78, 80 sind als Fortsätze am Grundkörper 50 angeformt. Jedes Vertikalhaltemittel 78, 80 weist eine bogenförmig gekrümmte Außenfläche 82, 84 auf. Die Vertikalhaltemittel 78, 80 bilden ein Gegenstück zu den Führungselementen 22, 24 sowie zu in den Führungselementen 22, 24 eingelassene Befestigungsnuten 86, 88. Bei einer Drehung des Wischarmadapters 10 relativ zum Wischblattadapter 12 um die Vertikalachse 16, greifen die Vertikalhaltemittel 78, 80 formschlüssig in die Befestigungsnuten 86, 88. Die Führungselemente 22, 24 vermeiden somit eine Bewegung des Wischarmadapters 10 relativ zum Wischblattadapter 12 parallel zur Vertikalachse 16. Die Rastmittel 30, 32 werden bei dem Montagevorgang von den Führungselementen 22, 24 elastisch ausgelenkt. Dabei werden die Rastmittel 30, 32 in einem Endbereich in Richtung der Lagerausnehmung 20 bewegt. Schließlich kommt der Grundkörper 50 des Wischarmadapters 10 mit den Anschlagelementen 94, 96 zur Anlage. Die Anschlagelemente 94, 96 vermeiden ein Überdrehen des Wischarmadapters 10 relativ zum Wischblattadapter 12. Ferner nehmen die Anschlagelemente 94, 96 in einem Betriebszustand auftretende Drehmomente um die Vertikalachse 16 zumindest teilweise auf.

Figur 4 zeigt die Wischblattadaptervorrichtung in einem montierten Zustand. Die Rastmittel 30, 32 sind formschlüssig innerhalb der Rastausnehmungen 34, 36 angeordnet. Die Rasteinheit 48 bildet eine Rastverbindung zwischen dem Wischarmadapter 10 und dem Wischblattadapter 12. Ein Verdrehen des Wischarmadapters 10 relativ zum Wischblattadapter 12 ist dadurch vermieden. Eine Außenfläche 90 des Grundkörpers 50 des Wischarmadapters 10 liegt bündig mit einer Außenfläche 92 des Grundkörpers 56 des Wischblattadapters 12 an. Der Lagerzapfen 18 leitet auftretende Betriebskräfte, die senkrecht zur Vertikalachse 16 verlaufen, im montierten Zustand direkt an den Wischarmadapter 10 weiter. Betriebskräfte, die parallel zur Vertikalachse 16 auftreten, werden von den Vertikalhaltemitteln 78, 80 und den Führungselementen 22, 24 weitergeleitet.

Ein Lösen der Rastverbindung ist durch ein Auslenken der Rastmittel 30, 32 möglich. Dabei werden die Rastmittel 30, 32 entgegen ihrer inneren Spannkraft aus den korrespondierenden Rastausnehmungen 34, 36 bewegt. Anschließend wird der Wischarmadapter 10 relativ zum Wischblattadapter 12 gedreht. Dadurch werden die Vertikalhaltemittel 78, 80 aus den Befestigungsnuten 86, 88 freigegeben, und der Wischarmadapter 10 kann vom Lagerzapfen 18 abgenommen werden.

## Patentansprüche

1. Wischblattadaptervorrichtung mit einem Wischarmadapter (10) und einem Wischblattadapter (12) und einer Drehlagereinheit (14), die dazu vorgesehen ist, den Wischarmadapter (10) und den Wischblattadapter (12) bei einem Montagevorgang relativ zueinander um eine Vertikalachse (16) drehbar zu lagern und einer Rasteinheit (48), die dazu vorgesehen ist, in einem montierten Zustand eine Rastverbindung zwischen dem Wischarmadapter (10) und dem Wischblattadapter (12) zu bilden, wobei die Rasteinheit (48) zumindest eine Rastausnehmung (34, 36) und zumindest ein Rastmittel (30, 32) aufweist, wobei das zumindest eine Rastmittel (30, 32) in einem montierten Zustand formschlüssig innerhalb der zumindest einen Rastausnehmung (34, 36) angeordnet ist und das zumindest eine Rastmittel (30, 32) am Wischarmadapter (10) angeordnet ist und die Drehlagereinheit (14) einen Lagerzapfen (18) umfasst, der dazu vorgesehen ist, in einem montierten Zustand einen Formschluss mit einer Lagerausnehmung (20) zu bilden, **dadurch gekennzeichnet, dass** das zumindest eine Rastmittel (30, 32) dazu vorgesehen ist, um die Vertikalachse (16) ausgelenkt zu werden.

2. Wischblattadaptervorrichtung zumindest nach Anspruch 1, **dadurch gekennzeichnet, dass** die Rastausnehmung (34, 36) am Wischblattadapter (12) angeordnet ist.

3. Wischblattadaptervorrichtung nach Anspruch 1, **dadurch gekennzeichnet, dass** der Lagerzapfen (18) am Wischblattadapter (12) angeordnet ist.

4. Wischblattadaptervorrichtung zumindest nach Anspruch 7, **dadurch gekennzeichnet, dass** die Lagerausnehmung (20) am Wischarmadapter (10) angeordnet ist.

## Claims

1. Wiper blade adapter device with a wiper arm adapter (10) and a wiper blade adapter (12) and a rotary bearing unit (14) which is provided to mount the wiper arm adapter (10) and the wiper blade adapter (12) so as to be rotatable relative to each other about a vertical axis (16) during an assembly operation, and a latching unit (48) which is provided to form a latching connection between the wiper arm adapter (10) and the wiper blade adapter (12) in an assembled state, wherein the latching unit (48) has at least one latching recess (34, 36) and at least one latching means (30, 32), wherein, in an assembled state, the at least one latching means (30, 32) is arranged in a form-fitting manner within the at least one latching recess (34, 36), and the at least one latching means (30, 32) is arranged on the wiper arm adapter (10), and the rotary bearing unit (14) comprises a bearing pin (18) which is provided to form a form fit with a bearing recess (20) in an assembled state, **characterized in that** the at least one latching means (30, 32) is provided in order to be deflected about the vertical axis (16).

2. Wiper blade adapter device at least according to Claim 1, **characterized in that** the latching recess (34, 36) is arranged on the wiper blade adapter (12).

3. Wiper blade adapter device according to Claim 1, **characterized in that** the bearing pin (18) is arranged on the wiper blade adapter (12).

4. Wiper blade adapter device at least according to Claim 7, **characterized in that** the bearing recess (20) is arranged on the wiper arm adapter (10).

## Revendications

1. Dispositif adaptateur de balai d'essuie-glace avec un adaptateur de bras d'essuyage (10) et un adaptateur de balai d'essuie-glace (12) et une unité de palier pivotant (14), servant à loger de façon à pouvoir faire pivoter autour d'un axe vertical (16) l'adaptateur de bras d'essuyage (10) et l'adaptateur de balai d'essuie-glace (12) l'un par rapport à l'autre lors d'un processus de montage et avec une unité d'arrêt (48) prévue pour former, dans un état monté, une liaison d'arrêt entre l'adaptateur de bras d'essuyage (10) et l'adaptateur de balai d'essuie-glace (12), l'unité d'arrêt (48) comportant au moins un évidement d'arrêt (34, 36) et au moins un moyen d'arrêt (30, 32), l'au moins un moyen d'arrêt (30, 32) étant disposé, dans un état monté, par complémentarité de formes à l'intérieur de l'au moins un évidement d'arrêt (34, 36) et l'au moins un moyen d'arrêt (30, 32) étant disposé au niveau de l'adaptateur de bras d'essuyage (10) et l'unité de palier pivotant (14) comprenant un tenon de palier (18) prévu pour former, dans un état monté, une complémentarité de formes avec un évidement de palier (20), **caractérisé en ce que** l'au moins un moyen d'arrêt (30, 32) est prévu pour dévier légèrement l'axe vertical (16).

2. Dispositif adaptateur de balai d'essuie-glace au moins selon la revendication 1, **caractérisé en ce que** l'évidement d'arrêt (34, 36) est disposé au niveau de l'adaptateur de balai d'essuie-glace (12).

3. Dispositif adaptateur de balai d'essuie-glace selon la revendication 1, **caractérisé en ce que** le tenon de palier (18) est disposé au niveau de l'adaptateur de balai d'essuie-glace (12).

4. Dispositif adaptateur de balai d'essuie-glace au moins selon la revendication 7, **caractérisé en ce que** l'évidement de palier (20) est disposé au niveau de l'adaptateur de bras d'essuyage (10).
